# EUROPEAN PATENT APPLICATION

(11) **EP 4 644 009 A1**
(43) Date of publication of application: **05.11.2025**
(21) Application number: 24173479.7
(22) Date of filing: 30.04.2024
(51) Int. Cl.: B08B 9/08, B60P 3/22

(54) **A PROCESS FOR CLEANING A FUEL TANK**

(71) Applicant: Neitzel, James P., 68623 Lampertheim (DE)
(72) Inventor: Neitzel, James P., 68623 Lampertheim (DE)
(74) Representative: Ellwanger, Arndt

(57) **Abstract**

The present invention relates to a process for cleaning a fuel tank comprising the steps a) and b) and optionally the steps c) and/or d). Within step a) the fuel tank is tilted in a first direction (d1) with a tilt angle α¹ in the range of 3° ≤ α¹ ≤ 30° (relative to the horizontal). Step a) is followed by step b), wherein fuel is removed from at least one discharge port of the fuel tank, said fuel tank being in the tilted position with a tilt angle α¹ in the range of 3° ≤ α¹ ≤ 30° (relative to the horizontal) according to step a), until the amount of the remaining fuel within the fuel tank does not exceed 5 vol.-% of the maximum capacity of the respective fuel tank. Afterwards, an optional step c) can be carried out, wherein the fuel tank is dried. Alternatively, or in addition to step c), an optional step d) can be carried out, wherein the fuel tank is transferred from its tilted position according to step b) back into its ordinary position.

## Description

The present invention relates to a process for cleaning a fuel tank comprising the steps a) and b) and optionally the steps c) and/or d). Within step a) the fuel tank is tilted in a first direction (d1) with a tilt angle α¹ in the range of 3° ≤ α¹ ≤ 30° (relative to the horizontal). Step a) is followed by step b), wherein fuel is removed from at least one discharge port of the fuel tank, said fuel tank being in the tilted position with a tilt angle α¹ in the range of 3° ≤ α¹ ≤ 30° (relative to the horizontal) according to step a), until the amount of the remaining fuel within the fuel tank does not exceed 5 vol.-% of the maximum capacity of the respective fuel tank. Afterwards, an optional step c) can be carried out, wherein the fuel tank is dried. Alternatively, or in addition to step c), an optional step d) can be carried out, wherein the fuel tank is transferred from its tilted position according to step b) back into its ordinary position.

Fuel tanks widely known/used in practice in order to fill/load fuel such as gasoline into devices such as aircrafts, ships or vans. For example, it is quite common that the fuel tank itself as part of or mounted on a truck. Such type of fuel tanks is also known as mobile fuel tanks. The respective fuel tank is used many times. Depending on the capacity of the respective fuel tank, the fuel contained therein can be used for filling/loading fuel into at least one device such as an aircraft. However, each fuel tank has only a limited capacity and has, therefore, be refilled with fuel on a regular basis.

Beyond that, fuel tanks also have to be cleaned on a regular basis. One reason for cleaning fuel tanks can be seen in unwanted residues/byproducts contained within the fuels, which sink on the ground of the respective fuel tank. Another reason can be seen in the fact that sometimes the type of fuel to be filled into the respective fuel tanks has to be exchanged. By consequence, the respective fuel tank has to be completely freed of any leftovers/remainders of the first type of fuel prior to be filled with the second/different type of fuel.

Beyond that, mobile fuel tanks such as those being mounted on a truck have to be transported by themselves once in a while, for example, on a ship or on an airplane. Due to safety aspects, the respective mobile fuel tanks have to be cleaned prior to be transported by themselves. The same holds true in case maintenance work have to be carried out within the respective fuel tank.

Commercially available/known tank cleaning proceedings have several disadvantages. A general problem of such cleaning processes is the removal of leftovers/remainders of fuel, which can make up to 5 vol.-% of the maximum capacity of the respective fuel tank. Due to the geometry/size of the respective fuel tank and/or the position or number of, for example, discharge ports of the respective fuel tank, the removal of such leftovers/remainders of fuel is technically complicated.

One common problem of such known cleaning proceedings is the employment of water, cleaning solution chemicals and high temperature steam to be mixed with the leftovers/remainders of fuel followed by removal of the respective mixture. These types of tank cleaning service providers create excessive waste, additional costs removing trapped residues not extracted, cause damage to the fuel delivery system if not removed in less than 30 days and are high risk of contaminating the quality of the respective fuel, in particular aviation fuel quality.

The object of the present invention, therefore, is to provide a novel process for cleaning fuel tanks.

This object is achieved by a process for cleaning a fuel tank comprising the steps a) to b) and optionally c) and/or d) as follows:
a) tilting the fuel tank in a first direction (d1) with a tilt angle α¹ in the range of 3° ≤ α¹ ≤ 30° (relative to the horizontal),
b) removing fuel from at least one discharge port of the fuel tank, said fuel tank being in the tilted position with a tilt angle α¹ in the range of 3° ≤ α¹ ≤ 30° (relative to the horizontal) according to step a), until the amount of the remaining fuel within the fuel tank does not exceed 5 vol.-% of the maximum capacity of the respective fuel tank,
c) optionally drying the fuel tank after step b) is finished,
d) optionally transferring the fuel tank from its tilted position according to step b) into its ordinary position, said ordinary position having a tilt angle α⁰ in the range of 0° ≤ α⁰ ≤ 0.5 (relative to the horizontal), preferably with α⁰ = 0°,
wherein step c) is followed by step d) or vice versa in case both optional steps c) and d) are carried out.

Surprisingly, it has been found that by applying the inventive process, the disadvantages known from prior art, such as the use of chemical, can be avoided. The inventive process provides an effective and efficient way to remove leftovers/remainders of fuel from a fuel tank.

Tank cleaning is required before a qualified person/worker enters the tank internal shell. Since the inventive fuel tank cleaning process is carried out more effectively and more efficiently, workers have lower safety risk of being exposed to hazards of fuel when entering the respective fuel tank in order to check on leftovers/remainders of fuel or even manually clean the respective fuel tank from such leftovers/remainders of fuel and/or carrying out maintenance work.

Another advantage can, therefore, be seen in an improved mobile or fixed cargo tank facility procedure to remove (preferably) all identified hazards from the interior shells of, for example aviation fuel cargo transport tanks interior and preserve aviation fuel quality assurance.

All individual steps in the process are US Title 29 Occupational Safe & Environmentally Friendly accepted work practices. No water, no steam and no chemical cleaning agent containments are required/obtained for carrying out the inventive process or will make contact with, for example, cargo tank interior shells or to any of the attached fuel delivery piping system components.

By consequence, the inventive process is a 100% green, environmentally friendly procedure that captures and recycles all hazards with no generation of additional hazardous waste or emissions while removing, for example, aviation fuel residues and the known hazardous vapors.

The inventive process can be successfully employed within any manufactured US DOT type cargo tanks and/ or European manufactured tank code type "LGBF" with bottom openings.

Another advantage can be seen in its ensured safety since the process is designed to prepare cargo transport tanks for confined space entry-permit and international requirements to ship / transport as a non-hazardous transport after process.

The present invention is further specified herein below.

A first subject matter of the invention relates to a process for cleaning a fuel tank comprising the steps a) to b) and optionally c) and/or d) as follows:
a) tilting the fuel tank in a first direction (d1) with a tilt angle α¹ in the range of 3° ≤ α¹ ≤ 30° (relative to the horizontal),
b) removing fuel from at least one discharge port of the fuel tank, said fuel tank being in the tilted position with a tilt angle α¹ in the range of 3° ≤ α¹ ≤ 30° (relative to the horizontal) according to step a), until the amount of the remaining fuel within the fuel tank does not exceed 5 vol.-% of the maximum capacity of the respective fuel tank,
c) optionally drying the fuel tank after step b) is finished,
d) optionally transferring the fuel tank from its tilted position according to step b) into its ordinary position, said ordinary position having a tilt angle α⁰ in the range of 0° ≤ α⁰ ≤ 0.5 (relative to the horizontal), preferably with α⁰ = 0°,
wherein step c) is followed by step d) or vice versa in case both optional steps c) and d) are carried out.

According to step a) of the process of the present invention, the fuel tank is tilted in a first direction (d1) with a tilt angle α¹ in the range of 3° ≤ α¹ ≤ 30° (relative to the horizontal).

Usually, the fuel tank is in its ordinary position (relative to the horizontal) prior to carrying out step a). This means that prior to carrying out step a) the respective fuel tank is (preferably) not tilted at all or only in a very small tilt angle α⁰ in the range of 0° ≤ α⁰ ≤ 0.5 (relative to the horizontal). Expressed in other words, the ordinary position of a fuel tank corresponds to that position of the respective fuel tank when the fuel (contained within the respective fuel tank) is, for example, transferred/filed into the tank of an airplane or van under standard/common operation conditions.

The skilled person knows due to his overall knowledge how a fuel tank can be tilted, for example, in a first direction (d1) with a tilt angle α¹ in the range of 3° ≤ α¹ ≤ 30° (relative to the horizontal). The tilting as such can be carried out, for example, by a device affixed/connected to the respective fuel tank which is, for example, part of a truck. However, the tilting within the context of the present invention can be also carried out by placing the respective fuel tank on a separate device not being affixed/connected to the respective fuel tank. This means that, for example, the respective fuel tank is not tilted in respect of the truck as such, but the entire truck including the respective fuel tank are tilted since the device, on which the respective fuel tank/truck is being placed, is tilted by itself.

Preferably, the fuel tank is placed on a device, said device can be tilted in at least one direction with a tilt angle α up to 30°, preferably the device can be tilted in three different directions, said directions are in an angle of 90° to each other and the tilt angle α is up to 30° for each direction independently.

Within step a) it is preferred that the tilt angle α¹ is in the range of 3° ≤ α¹ ≤ 25°, more preferably in the range of 3° ≤ α¹ ≤ 15°, most preferably in the range of 7° ≤ α¹ ≤ 12° (relative to the horizontal). For the sake of completeness, it is indicated that the before mentioned preferred values/ranges for the tilt angle α¹ are also valid in respect of step b) as described below.

Any fuel tank known to the person skilled in the art may be employed within the inventive process. The fuel tank may be a fixed fuel tank or a movable fuel tank, preferably a movable fuel tank. It is preferred that the fuel tank is a cargo tank for military and/or commercial use. It is also preferred that the fuel tank is affixed to a truck or to the trailer of a truck, preferably to the trailer of a truck. The fuel tank may, of course, contain further feature/items/devices known to the person skilled in the art such as inlets, outlets, discharge ports etc.

The fuel tank may have any shape/form known to the person skilled in the art, preferably the fuel tank is a box, and/or has a rectangular or elliptical form.

The fuel tank may have any capacity known to the person skilled in the art, preferably the fuel tank has a maximum capacity in the range of 300 I to 40 000 I, preferably in the range of 1 000 I to 20 000 I, more preferably in the range of 2 000 I to 10 000 I.

The fuel tank may contain any fuel known to the person skilled in the art. Preferably, the fuel is gasoline, diesel or fuel for aircrafts, preferably fuel for aircrafts, more preferably the fuel for aircrafts is kerosene grade turbine fuel, in particular of Jet-A type or Jet-B type.

Prior to carrying out step a), the respective fuel tank contains at least some fuel, preferably in an amount of at least 3 vol.-% of the maximum capacity of the respective fuel tank. The respective fuel tank may even contain the maximum capacity of fuel prior to carrying out step a). Preferably, the fuel tank contains fuel in an amount not exceeding 50 vol.-%, preferably not exceeding 40 vol.-%, most preferably not exceeding 30 vol.-%, of the maximum capacity of the respective fuel tank prior to carrying out step a).

It is preferred that the interior of the fuel tank is divided by a number n of support walls, wherein the number n is an integer of at least 1, into n + 1 individual sections of the fuel tank, said individual sections may have a fluid connection with each other and/or each individual section may have at least one separate discharge port.

It is also preferred that at least one discharge port of the fuel tank is placed on the bottom side of the respective fuel tank. The bottom side of a fuel tank corresponds to that side of the respective fuel tank which directs to the bottom when said fuel tank is in its ordinary position (relative to the horizontal). Preferably, each individual section of the fuel tank contains at least one discharge port being placed on the bottom side of the respective fuel tank.

Within step a) of the process of the present invention, it is preferred that the first direction (d1) within step a) is in accordance with the direction of the largest possible distance between two opposing outer walls of the respective fuel tank, preferably the first direction (d1) is in accordance with the direction of movement of a movable fuel tank affixed to a truck or to the trailer of a truck and the two opposing outer walls of the respective fuel tank are formed by the rear side and the front side of the fuel tank (in relation to the direction of forward movement of the respective truck).

According to step b) of the process of the present invention, fuel is removed from at least one discharge port of the fuel tank, said fuel tank being in the tilted position with a tilt angle α¹ in the range of 3° ≤ α¹ ≤ 30° (relative to the horizontal) according to step a), until the amount of the remaining fuel within the fuel tank does not exceed 5 vol.-% of the maximum capacity of the respective fuel tank.

Preferably, the amount of the remaining fuel within the fuel tank does not exceed 3 vol.-%, more preferably 1 vol.-%, of the maximum capacity of the respective fuel tank after step b) is finished.

Within step b) of the process of the present invention, it is preferred that the fuel is removed from a discharge port which is the lowest one of the fuel tank in respect of the first direction (d1) and relative to the horizontal, preferably said discharge port is on the bottom side of a movable fuel tank affixed to a truck or to the trailer of a truck and/or said discharge port is the one being the next to the rear side of the fuel tank (in relation to the direction of forward movement of the respective truck).

After carrying out step b) of the process of the present invention, at least one of the optional steps c) and/or d) may be carried out. Within the present invention, it is preferred that at least one of the optional steps c) and/or d) is carried out, it is even more preferred that both optional steps c) and d) are carried out. In case both optional steps c) and d) are carried out within the process of the present invention, step c) is followed by step d) or vice versa.

According to step c) of the process of the present invention, the fuel tank is dried after step b) is finished.

The drying of the fuel tank according to step c) may be carried out by any method known to the skilled person. Preferably, the drying of the fuel tank according to step c) is carried out by introducing air via at least one inlet into the interior of the fuel tank and removing air or a mixture of air and fuel vapor from at least one discharge port.

It is preferred that the respective substances such as air or full vapor, which are removed from at least one discharge port out of the fuel tank, are transferred into separate vessels, tanks, devices etc. This transfer may be carried out by connecting the fuel tank with pipes, adaptive devices etc.

More preferably, the at least one discharge port is connected to at least one suction device, preferably to at least one pump, in order to remove air or a mixture of air and fuel vapor. Since the removed mixture of air and fuel vapors are highly flammable and dangerous inhalation hazards, it is preferred that they are transferred and trapped in an active coal filter system.

The above-mentioned additional devices such as suction devices or pumps for carrying out drying step c) are known to the skilled person. The respective devices may vary in respect of their individual form, size or shape depending on the individual fuel tank and/or the item to be filled was fuel such as airplanes, ships or vans.

According to step d) of the process of the present invention, the fuel tank is transferred from its tilted position according to step b) into its ordinary position, said ordinary position having a tilt angle α⁰ in the range of 0° ≤ α⁰ ≤ 0.5 (relative to the horizontal), preferably with α⁰ = 0°.

Within the process of the present invention, it is preferred that the inventive process comprises at least two further steps e) and f), wherein step e) is carried out after step b) and step f) is carried out prior to step c):
e) tilting the fuel tank in a second direction (d2) with a tilt angle α² in the range of 1° ≤ α² ≤ 30° (relative to the horizontal), wherein the second direction (d2) has an angle β = 90° relative to the first direction (d1) [in respect to a Cartesian coordinate system],
f) removing fuel from at least one discharge port of the fuel tank, said fuel tank is in the tilted position with a tilt angle α² in the range of 1° ≤ α² ≤ 30° (relative to the horizontal), according to step e), until the amount of the remaining fuel within the fuel tank does not exceed 1 vol. % of the maximum capacity of the respective fuel tank, wherein the at least one discharge port of the fuel tank may be a different one than the respective at least one discharge port as used in step b).

Within step e) it is preferred that the tilt angle α² is in the range of 1° ≤ α² ≤ 25°, preferably in the range of 3° ≤ α² ≤ 15°, more preferably in the range of 7° ≤ α² ≤ 12° (relative to the horizontal). For the sake of completeness, it is indicated that the before mentioned preferred values/ranges for the tilt angle α² are also valid in respect of step f) as described above.

Preferably, the amount of the remaining fuel within the fuel tank does not exceed 0,5 vol.-%, more preferably 0,3 vol.-%, of the maximum capacity of the respective fuel tank after step f) is finished.

Within step f) it is preferred that the fuel is removed from at least one discharge port which is in the middle between two opposing outer walls of the respective fuel tank and the direction of the distance between said two outer walls is in accordance with the second direction (d2).

Within the process of the present invention, it is more preferred that the inventive process comprises at least two further steps g) and h), wherein step g) is carried out after step f) and step h) is carried out prior to step c):
g) tilting the fuel tank in a third direction (d3) with a tilt angle α³ in the range of 1° ≤ α³ ≤ 30° (relative to the horizontal), wherein the third direction (d3) has an angle γ = 180° relative to the second direction (d2) [in respect to a Cartesian coordinate system] ,
h) removing fuel from at least one discharge port of the fuel tank, said fuel tank is in the tilted position with a tilt angle α³ in the range of 1° ≤ α³ ≤ 30° (relative to the horizontal) according to step g), until the remaining fuel within the fuel tank does not exceed 0.5 vol. % of the maximum capacity of the respective fuel tank, wherein the at least one discharge port of the fuel tank may be a different one than the respective at least one discharge port as used in step b).

Within step g) it is preferred that the tilt angle α³ is in the range of 1° ≤ α³ ≤ 25°, preferably in the range of 3° ≤ α³ ≤ 15°, more preferably in the range of 7° ≤ α³ ≤ 12° (relative to the horizontal). For the sake of completeness, it is indicated that the before mentioned preferred values/ranges for the tilt angle α³ are also valid in respect of step h) as described above.

Preferably, the amount of the remaining fuel within the fuel tank does not exceed 0,1 vol.-%, preferably 0,01 vol.-% of the maximum capacity of the respective fuel tank after step h) is finished.

Within step h) it is preferred that the fuel is removed from at least one discharge port which is in the middle between two opposing outer walls of the respective fuel tank and the direction of the distance between said two outer walls is in accordance with the third direction (d3). It is even more preferred that the fuel is removed from the same at least one discharge ports in steps f) and h).

Within the process of the present invention, it is also preferred that a first draining step is carried out prior to step a) in order to remove some of the fuel from at least one discharge port, wherein the fuel tank remains in its ordinary position (relative to the horizontal) during said first draining step.

In one embodiment of the present invention, a first cycle of steps e) and f) followed by steps g) and h) is carried out and this cycle is repeated at least once. The number of cycles is not limited, however, usually it is not required to carry out more than three cycles.

In another embodiment of the present invention, step d) is carried out after step b) and prior to step e) and step d) may be repeated at least once after carrying out step f) or step h).

Was in the process of the present invention, the tilt angle α¹ of step a), tilt angle α² of step e) and tilt angle α³ of step g) can be selected independently from each other. However, it is preferred that at least two, more preferably all three tilt angles α¹, α² and α³ have the same value each when carrying out the inventive process. In one embodiment of the present invention, it is preferred that the inventive process is carried out with identical tilt angels α² and α³.

In a preferred embodiment of the present invention, the tilting of the fuel tank from a first direction (d1) into a second direction (d2) is carried out in one step by reducing the angle α¹ at the same time as raising the angle α².

In a very preferred embodiment of the present invention, the amount of the remaining fuel within the fuel tank does not exceed 0.01 vol.-% of the maximum capacity of the respective fuel tank after steps c), f) and h) are carried out each at least once, preferably step c) is carried out afterwards and the amount of the remaining fuel is less than 10 ppm, preferably less than 0.1 ppm, of the maximum capacity of the respective fuel tank after the drying of the respective fuel tank is finished.

The invention is illustrated hereinafter by figures and/or examples.

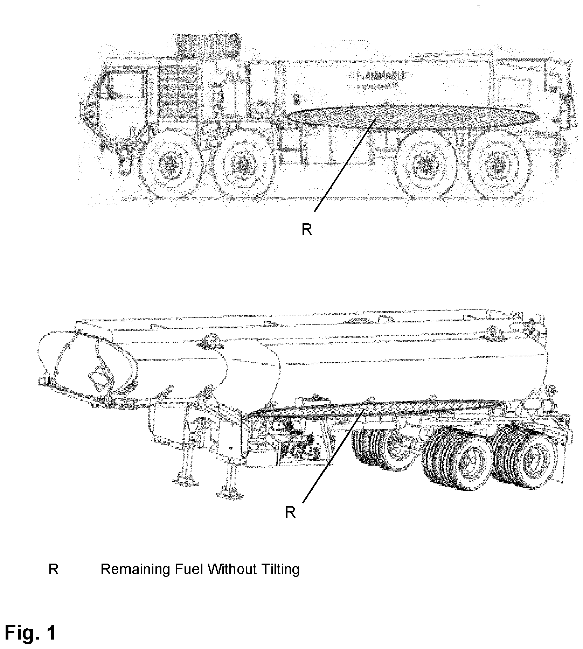

Figure 1 shows two different types of mobile fuel tanks. The respective fuel tank is part of a truck (as a truck trailer in the lower part of figure 1) or mounted on a truck ( as shown in the upper part of figure 1). Both type of fuel tanks contains leftovers/remainders of fuel, which can make up to 5 vol.-% of the maximum capacity of the respective fuel tank. Both fuel tanks are in their ordinary position (relative to the horizontal).

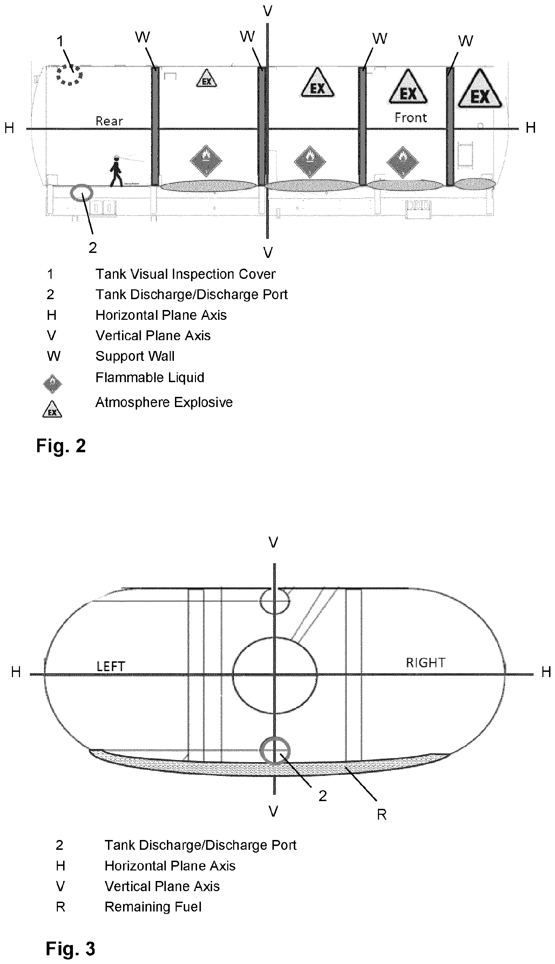

Figure 2 shows the side view of a fuel tank having an elliptical form. The fuel tank is in its ordinary position (relative to the horizontal). The respective fuel tank contains several support walls dividing the fuel tank into several individual chambers. The individual chamber shown in the upper part has already been cleaned by conventional methods including water or steam. By consequence, the individual chamber shown on the left side can now be entered by workers to carry out maintenance work. However, the worker cannot enter the other individual chambers of the respective fuel tank sense since they still contain leftovers/remainders of fuel being flammable and causing an explosive atmosphere.
Figure 3 shows an end view of one of the individual chambers of the fuel tank having an elliptical form according to figure 2. The fuel tank is in its ordinary position (relative to the horizontal). The individual chamber still contains leftovers/remainders of fuel which cannot be easily Removed from the respective discharge port since the liquid level of said leftovers/remainders of fuel is below the outlet of said discharge port.

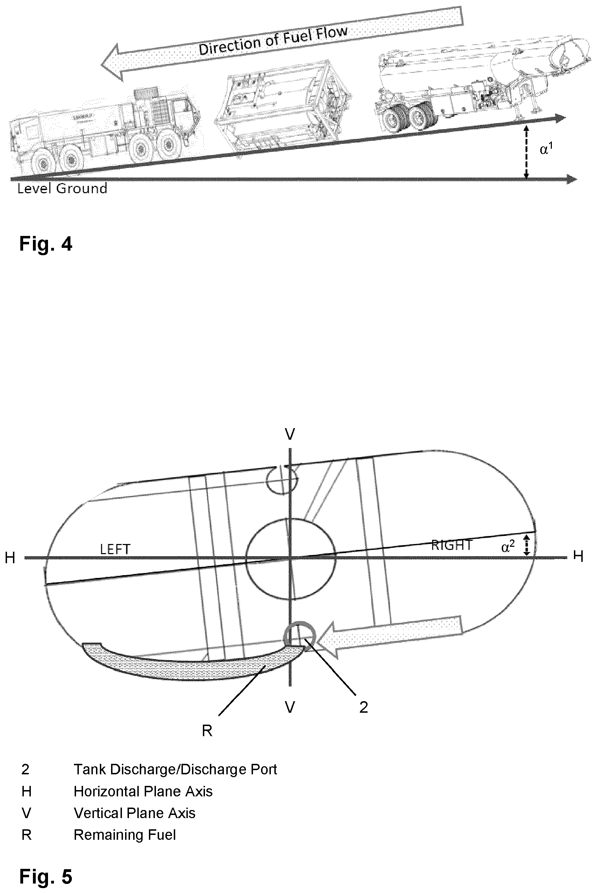

Figure 4 shows 3 different types of fuel tanks in the form of a side view each. All three different type of fuel tanks are tilted (according to step a)) in a first direction (d1) with a tilt angle α¹ in the range of 3° ≤ α¹ ≤ 30° (relative to the horizontal).
Figure 5 shows an end view of one of the individual chambers of the fuel tank having an elliptical form according to figure 2. In contrast to figure 2, wherein the fuel tank is in its ordinary position (relative to the horizontal), the respective fuel tank of figure 5 is tilted (according to step e)) in a second direction (d2) with a tilt angle α² in the range of 1° ≤ α² ≤ 30° (relative to the horizontal), wherein the second direction (d2) has an angle β = 90° relative to the first direction (d1) [in respect to a Cartesian coordinate system] as shown in Figure 4.

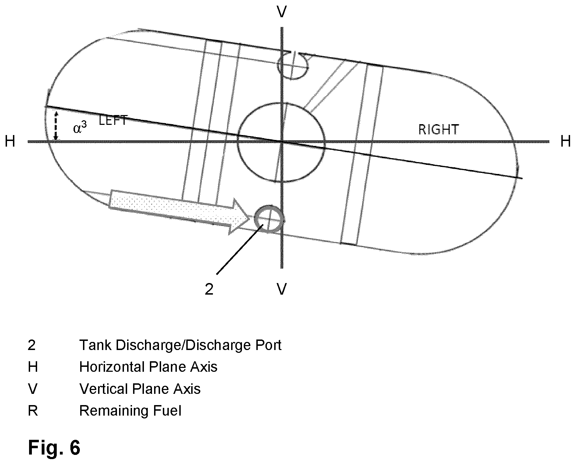

Figure 6 shows an end view of one of the individual chambers of the fuel tank having an elliptical form according to figure 2. In contrast to figure 2, wherein the fuel tank is in its ordinary position (relative to the horizontal), the respective fuel tank of figure 6 is tilted (according to step g)) in a third direction (d3) with a tilt angle α³ in the range of 1° ≤ α³ ≤ 30° (relative to the horizontal), wherein the third direction (d3) has an angle γ = 180° relative to the second direction (d2) [in respect to a Cartesian coordinate system] as shown in Figure 5.

## Claims

1. A process for cleaning a fuel tank comprising the steps a) to b) and optionally c) and/or d) as follows:
a) tilting the fuel tank in a first direction (d1) with a tilt angle α¹ in the range of 3° ≤ α¹ ≤ 30° (relative to the horizontal),
b) removing fuel from at least one discharge port of the fuel tank, said fuel tank being in the tilted position with a tilt angle α¹ in the range of 1° ≤ α¹ ≤ 30° (relative to the horizontal) according to step a), until the amount of the remaining fuel within the fuel tank does not exceed 5 vol.-% of the maximum capacity of the respective fuel tank,
c) optionally drying the fuel tank after step b) is finished,
d) optionally transferring the fuel tank from its tilted position according to step b) into its ordinary position, said ordinary position having a tilt angle α⁰ in the range of 0° ≤ α⁰ ≤ 0.5 (relative to the horizontal), preferably with α⁰ = 0°,
wherein step c) is followed by step d) or vice versa in case both optional steps c) and d) are carried out.

2. The process according to claim 1, comprising at least two further steps e) and f), wherein step e) is carried out after step b) and step f) is carried out prior to step c):
e) tilting the fuel tank in a second direction (d2) with a tilt angle α² in the range of 1° ≤ α² ≤ 30° (relative to the horizontal), wherein the second direction (d2) has an angle β = 90° relative to the first direction (d1) [in respect to a Cartesian coordinate system],
f) removing fuel from at least one discharge port of the fuel tank, said fuel tank is in the tilted position with a tilt angle α² in the range of 1° ≤ α² ≤ 30° (relative to the horizontal), according to step e), until the amount of the remaining fuel within the fuel tank does not exceed 1 vol. % of the maximum capacity of the respective fuel tank, wherein the at least one discharge port of the fuel tank may be a different one than the respective at least one discharge port as used in step b).

3. The process according to claim 2, comprising at least two further steps g) and h), wherein step g) is carried out after step f) and step h) is carried out prior to step c):
g) tilting the fuel tank in a third direction (d3) with a tilt angle α³ in the range of 1° ≤ α³ ≤ 30° (relative to the horizontal), wherein the third direction (d3) has an angle γ = 180° relative to the second direction (d2) [in respect to a Cartesian coordinate system] ,
h) removing fuel from at least one discharge port of the fuel tank, said fuel tank is in the tilted position with a tilt angle α³ in the range of 1° ≤ α³ ≤ 30° (relative to the horizontal) according to step g), until the remaining fuel within the fuel tank does not exceed 0.5 vol. % of the maximum capacity of the respective fuel tank, wherein the at least one discharge port of the fuel tank may be a different one than the respective at least one discharge port as used in step b).

4. The process according to any of the claims 1 to 3, wherein
i) the fuel is gasoline, diesel or fuel for aircrafts, preferably fuel for aircrafts, more preferably the fuel for aircrafts is kerosene grade turbine fuel, in particular of Jet-A type or Jet-B type, and/or
ii) the fuel tank is a fixed fuel tank or a movable fuel tank, preferably a movable fuel tank, and/or
iii) the fuel tank is a cargo tank for military and/or commercial use, and/or
iv) the fuel tank is affixed to a truck or to the trailer of a truck, preferably to the trailer of a truck, and/or
v) the fuel tank is a box, and/or has a rectangular or elliptical form, and/or
vi) the interior of the fuel tank is divided by a number n of support walls, wherein the number n is an integer of at least 1, into n + 1 individual sections of the fuel tank, said individual sections may have a fluid connection with each other and/or each individual section may have at least one separate discharge port, and/or
vii) at least one discharge port of the fuel tank is placed on the bottom side of the respective fuel tank.

5. The process according to any of the claims 1 to 4, wherein
i) the tilt angle α¹ is in the range of 3° ≤ α¹ ≤ 25°, preferably in the range of 3° ≤ α¹ ≤ 15°, more preferably in the range of 7° ≤ α¹ ≤ 12° (relative to the horizontal), and/or
ii) the tilt angle α² is in the range of 1° ≤ α² ≤ 25°, preferably in the range of 3° ≤ α² ≤ 15°, more preferably in the range of 7° ≤ α² ≤ 12° (relative to the horizontal), and/or
iii) the tilt angle α³ is in the range of 1° ≤ α³ ≤ 25°, preferably in the range of 3° ≤ α³ ≤ 15°, more preferably in the range of 7° ≤ α³ ≤ 12° (relative to the horizontal).

6. The process according to any of claims 1 to 5, wherein
i) the fuel tank has a maximum capacity in the range of 300 I to 40 000 I, preferably in the range of 1 000 I to 20 000 I, more preferably in the range of 2 000 I to 10 000 I, and/or
ii) the fuel tank contains fuel in an amount not exceeding 50 vol.-%, preferably not exceeding 40 vol.-%, most preferably not exceeding 30 vol.-%, of the maximum capacity of the respective fuel tank prior to carrying out step a), and/or
iii) the fuel tank is in its ordinary position (relative to the horizontal) prior to carrying out step a), and/or
iv) a first draining step is carried out prior to step a) in order to remove some of the fuel from at least one discharge port, wherein the fuel tank remains in its ordinary position (relative to the horizontal) during said first draining step.

7. The process according to any of claims 1 to 6, wherein the drying of the fuel tank according to step c) is carried out by introducing air via at least one inlet into the interior of the fuel tank, and removing air or a mixture of air and fuel vapor from at least one discharge port,
preferably the at least one discharge port is connected to at least one suction device, preferably to at least one pump, in order to remove air or a mixture of air and fuel vapor.

8. The process according to any of claims 1 to 7, wherein the first direction (d1) within step a) is in accordance with the direction of the largest possible distance between two opposing outer walls of the respective fuel tank, preferably the first direction (d1) is in accordance with the direction of movement of a movable fuel tank affixed to a truck or to the trailer of a truck and the two opposing outer walls of the respective fuel tank are formed by the rear side and the front side of the fuel tank (in relation to the direction of forward movement of the respective truck).

9. The process according to any of claims 1 to 8, wherein
i) in step b), the fuel is removed from a discharge port which is the lowest one of the fuel tank in respect of the first direction (d1) and relative to the horizontal, preferably said discharge port is on the bottom side of a movable fuel tank affixed to a truck or to the trailer of a truck and/or said discharge port is the one being the next to the rear side of the fuel tank (in relation to the direction of forward movement of the respective truck), and/or
ii) in step f), the fuel is removed from at least one discharge port which is in the middle between two opposing outer walls of the respective fuel tank and the direction of the distance between said two outer walls is in accordance with the second direction (d2), and/or
iii) in step h), the fuel is removed from at least one discharge port which is in the middle between two opposing outer walls of the respective fuel tank and the direction of the distance between said two outer walls is in accordance with the third direction (d3), and/or
iv) the fuel is removed from the same at least one discharge ports in steps f) and h).

10. The process according to any of claims 1 to 9, wherein
i) the amount of the remaining fuel within the fuel tank does not exceed 3 vol.-%, preferably 1 vol.-%, of the maximum capacity of the respective fuel tank after step b) is finished, and/or
ii) the amount of the remaining fuel within the fuel tank does not exceed 0,5 vol.-%, preferably 0,3 vol.-%, of the maximum capacity of the respective fuel tank after step f) is finished, and/or
iii) the amount of the remaining fuel within the fuel tank does not exceed 0,1 vol.-%, preferably 0,01 vol.-% of the maximum capacity of the respective fuel tank after step h) is finished.

11. The process according to any of claims 1 to 10, wherein a first cycle of steps e) and f) followed by steps g) and h) is carried out and this cycle is repeated at least once.

12. The process according to any of claims 1 to 11, wherein
i) step d) is carried out after step b) and prior to step e) and step d) may be repeated at least once after carrying out step f) or step h), and/or
ii) the tilting of the fuel tank from a first direction (d1) into a second direction (d2) is carried out in one step by reducing the angle α¹ at the same time as raising the angle α².

13. The process according to any of claims 1 to 12, wherein the amount of the remaining fuel within the fuel tank does not exceed 0.01 vol.-% of the maximum capacity of the respective fuel tank after steps c), f) and h) are carried out each at least once, preferably step c) is carried out afterwards and the amount of the remaining fuel is less than 10 ppm, preferably less than 0.1 ppm, of the maximum capacity of the respective fuel tank after the drying of the respective fuel tank is finished.

14. The process according to any of claims 1 to 13, wherein the fuel tank is placed on a device, said device can be tilted in at least one direction with a tilt angle α up to 30°, preferably the device can be tilted in three different directions, said directions are in an angle of 90° to each other and the tilt angle α is up to 30° for each direction independently.

## Amended claims

### Amended claims in accordance with Rule 137(2) EPC.

1. A process for cleaning a fuel tank comprising the steps a) to b) as follows:
a) tilting the fuel tank in a first direction (d1) with a tilt angle α¹ in the range of 3° ≤ α¹ ≤ 30° relative to the horizontal,
b) removing fuel from at least one discharge port of the fuel tank, said fuel tank being in the tilted position with a tilt angle α¹ in the range of 3° ≤ α¹ ≤ 30° relative to the horizontal according to step a), until the amount of the remaining fuel within the fuel tank does not exceed 5 vol.-% of the maximum capacity of the respective fuel tank

2. The process according to claim 1, comprising at least one further step c) c) drying the fuel tank after step b) is finished.

3. The process according to claim 1 or 2, comprising at least one further step d)
d) transferring the fuel tank from its tilted position according to step b) into its ordinary position, said ordinary position having a tilt angle α⁰ in the range of 0° ≤ α⁰ ≤ 0.5 relative to the horizontal, preferably with α⁰ = 0°,
wherein step c) is followed by step d) or vice versa in case both optional steps c) and d) are carried out.

4. The process according to claim 2, comprising at least two further steps e) and f), wherein step e) is carried out after step b) and step f) is carried out prior to step c):
e) tilting the fuel tank in a second direction (d2) with a tilt angle α² in the range of 1° ≤ α² ≤ 30° relative to the horizontal, wherein the second direction (d2) has an angle β = 90° relative to the first direction (d1) in respect to a Cartesian coordinate system,
f) removing fuel from at least one discharge port of the fuel tank, said fuel tank is in the tilted position with a tilt angle α² in the range of 1° ≤ α² ≤ 30° relative to the horizontal, according to step e), until the amount of the remaining fuel within the fuel tank does not exceed 1 vol. % of the maximum capacity of the respective fuel tank, wherein the at least one discharge port of the fuel tank may be a different one than the respective at least one discharge port as used in step b).

5. The process according to claim 4, comprising at least two further steps g) and h), wherein step g) is carried out after step f) and step h) is carried out prior to step c):
g) tilting the fuel tank in a third direction (d3) with a tilt angle α³ in the range of 1° ≤ α³ ≤ 30° relative to the horizontal, wherein the third direction (d3) has an angle γ = 180° relative to the second direction (d2) in respect to a Cartesian coordinate system,
h) removing fuel from at least one discharge port of the fuel tank, said fuel tank is in the tilted position with a tilt angle α³ in the range of 1° ≤ α³ ≤ 30° relative to the horizontal according to step g), until the remaining fuel within the fuel tank does not exceed 0.5 vol. % of the maximum capacity of the respective fuel tank, wherein the at least one discharge port of the fuel tank may be a different one than the respective at least one discharge port as used in step b).

6. The process according to any of the claims 1 to 5, wherein
i) the fuel is gasoline, diesel or fuel for aircrafts, preferably fuel for aircrafts, more preferably the fuel for aircrafts is kerosene grade turbine fuel, in particular of Jet-A type or Jet-B type, and/or
ii) the fuel tank is a fixed fuel tank or a movable fuel tank, preferably a movable fuel tank, and/or
iii) the fuel tank is a cargo tank for military and/or commercial use, and/or
iv) the fuel tank is affixed to a truck or to the trailer of a truck, preferably to the trailer of a truck, and/or
v) the fuel tank is a box, and/or has a rectangular or elliptical form, and/or
vi) the interior of the fuel tank is divided by a number n of support walls, wherein the number n is an integer of at least 1, into n + 1 individual sections of the fuel tank, said individual sections may have a fluid connection with each other and/or each individual section may have at least one separate discharge port, and/or
vii) at least one discharge port of the fuel tank is placed on the bottom side of the respective fuel tank.

7. The process according to any of the claims 1 to 6, wherein
i)the tilt angle α¹ is in the range of 3° ≤ α¹ ≤ 25°, preferably in the range of 3° ≤ α¹ ≤ 15°, more preferably in the range of 7° ≤ α¹ ≤ 12° relative to the horizontal, and/or
ii) in step b), the fuel is removed from a discharge port which is the lowest one of the fuel tank in respect of the first direction (d1) and relative to the horizontal, preferably said discharge port is on the bottom side of a movable fuel tank affixed to a truck or to the trailer of a truck and/or said discharge port is the one being the next to the rear side of the fuel tank (in relation to the direction of forward movement of the respective truck), and/or
iii) the amount of the remaining fuel within the fuel tank does not exceed 3 vol.-%, preferably 1 vol.-%, of the maximum capacity of the respective fuel tank after step b) is finished.

8. The process according to claim 4, wherein
i) the tilt angle α² is in the range of 1° ≤ α² ≤ 25°, preferably in the range of 3° ≤ α² ≤ 15°, more preferably in the range of 7° ≤ α² ≤ 12° relative to the horizontal, and/or
ii) in step f), the fuel is removed from at least one discharge port which is in the middle between two opposing outer walls of the respective fuel tank and the direction of the distance between said two outer walls is in accordance with the second direction (d2), and/or
iii) the amount of the remaining fuel within the fuel tank does not exceed 0,5 vol.-%, preferably 0,3 vol.-%, of the maximum capacity of the respective fuel tank after step f) is finished.

9. The process according to claim 5, wherein
i) the tilt angle α³ is in the range of 1° ≤ α³ ≤ 25°, preferably in the range of 3° ≤ α³ ≤ 15°, more preferably in the range of 7° ≤ α³ ≤ 12° relative to the horizontal, and/or
ii) in step h), the fuel is removed from at least one discharge port which is in the middle between two opposing outer walls of the respective fuel tank and the direction of the distance between said two outer walls is in accordance with the third direction (d3), and/or
iii) the fuel is removed from the same at least one discharge ports in steps f) and h), and/or
iv) the amount of the remaining fuel within the fuel tank does not exceed 0,1 vol.-%, preferably 0,01 vol.-% of the maximum capacity of the respective fuel tank after step h) is finished.

10. The process according to any of claims 1 to 9, wherein
i) the fuel tank has a maximum capacity in the range of 300 I to 40 000 I, preferably in the range of 1 000 I to 20 000 I, more preferably in the range of 2 000 I to 10 000 I, and/or
ii) the fuel tank contains fuel in an amount not exceeding 50 vol.-%, preferably not exceeding 40 vol.-%, most preferably not exceeding 30 vol.-%, of the maximum capacity of the respective fuel tank prior to carrying out step a), and/or
iii) the fuel tank is in its ordinary position relative to the horizontal prior to carrying out step a), and/or
iv) a first draining step is carried out prior to step a) in order to remove some of the fuel from at least one discharge port, wherein the fuel tank remains in its ordinary position relative to the horizontal during said first draining step.

11. The process according to any of claims 2 to 10, wherein the drying of the fuel tank according to step c) is carried out by introducing air via at least one inlet into the interior of the fuel tank, and removing air or a mixture of air and fuel vapor from at least one discharge port,
preferably the at least one discharge port is connected to at least one suction device, preferably to at least one pump, in order to remove air or a mixture of air and fuel vapor.

12. The process according to any of claims 1 to 11, wherein the first direction (d1) within step a) is in accordance with the direction of the largest possible distance between two opposing outer walls of the respective fuel tank, preferably the first direction (d1) is in accordance with the direction of movement of a movable fuel tank affixed to a truck or to the trailer of a truck and the two opposing outer walls of the respective fuel tank are formed by the rear side and the front side of the fuel tank (in relation to the direction of forward movement of the respective truck).

13. The process according to any of claims 5 to 12, wherein a first cycle of steps e) and f) followed by steps g) and h) is carried out and this cycle is repeated at least once.

14. The process according to any of claims 5 to 13, wherein
i) step d) is carried out after step b) and prior to step e) and step d) may be repeated at least once after carrying out step f) or step h), and/or
ii) the tilting of the fuel tank from a first direction (d1) into a second direction (d2) is carried out in one step by reducing the angle α¹ at the same time as raising the angle α².

15. The process according to any of claims 5 to 14, wherein the amount of the remaining fuel within the fuel tank does not exceed 0.01 vol.-% of the maximum capacity of the respective fuel tank after steps c), f) and h) are carried out each at least once, preferably step c) is carried out afterwards and the amount of the remaining fuel is less than 10 ppm, preferably less than 0.1 ppm, of the maximum capacity of the respective fuel tank after the drying of the respective fuel tank is finished.

16. The process according to any of claims 1 to 15, wherein the fuel tank is placed on a device, said device can be tilted in at least one direction with a tilt angle α up to 30°, preferably the device can be tilted in three different directions, said directions are in an angle of 90° to each other and the tilt angle α is up to 30° for each direction independently.
